# EUROPÄISCHE PATENTSCHRIFT

(11) **EP 0 609 438 B1**
(45) Veröffentlichungstag und Bekanntmachung des Hinweises auf die Patenterteilung: **11.09.1996**
(21) Anmeldenummer: 92911912.1
(22) Anmeldetag: 27.05.1992
(51) Int. Cl.: F16H 3/093, F16H 3/04

(54) **GETRIEBE**
GEARBOX
BOITE DE VITESSES

(30) Priorität: 28.05.1991 SU 4939816
(43) Veröffentlichungstag der Anmeldung: 10.08.1994
(73) Patentinhaber: DYUDIN, Valery Vladimirovich, Omsk-30, 644030 (SU)
(72) Erfinder: DYUDIN, Valery Vladimirovich, Omsk-30, 644030 (SU)
(74) Vertreter: Sparing - Röhl - Henseler Patentanwälte
(86) Internationale Anmeldenummer: RU9200110
(87) Internationale Veröffentlichungsnummer: WO9221893

(56) Entgegenhaltungen:
- EP-A- 0 468 107
- CH-A- 500 404
- SU-A- 444 025
- SU-A- 1 698 536

## Beschreibung

### Gebiet der Technik

Die vorliegende Erfindung bezieht sich auf das Gebiet des Transportmaschinenbaus, genauer auf ein Getriebe, insbesondere von Kraftfahrzeugen.

### Voriger Stand der Technik

Es sind Lösungen der Aufgabe der Erhöhung der Wirtschaftlichkeit von Fahrzeugen durch vollere Belastung des Motors bei jeder Betriebsart bekannt. Diese Aufgabe wird insbesondere durch Schaffung von flexibleren Transmissionssystemen, durch Ausarbeitung von nach Strukturschema und Arbeitsweise unterschiedlichen Getrieben, welche die Belastung des Motors in Abhängigkeit von sich ständig verändernden Aussenlasten einzustellen ermöglichen, gelöst.

Mechanische Schaltgetriebe, welche zur Zeit die grösste Verbreitung erhalten haben, weisen in den meisten Fällen eine Antriebs-, Abtriebs- und Vorgelegewelle, sowie einen Zahnradsatz, Synchronisiereinrichtungen und eine Gangschaltung auf (W.I. Platonow "Allradtriebfahrzeuge", 1969, Verlag "Maschinostrojenije", Moskau, S. 92, Bild 26).

Dieser Typ von Getrieben wird durch einen hohen Wirkungsgrad charakterisiert und zur Verbesserung des Betriebsverhaltens ein Trend zur Vervollkommnung von Schaltgetrieben in Richtung der Vergrösserung der Zahl der Gänge und Aufhebung der Unterbrechung des Leistungsstromes des Motors bei deren Schaltung beobachtet.

Die Lösungen, welche auf die Vergrösserung der Gangzahl gerichtet sind, sind z.B. die Erfindungen SU-A-1362882, 1986 und SU-A-1131685, 1983. Die Konstruktion des Getriebes nach SU-A-1362882 weist eine Antriebs- und Abtriebswelle auf, auf welchen paarweise in Eingriff kommende Zahnräder relativ zu diesen Wellen frei drehbar gelagert sind. Zwischen diesen Zahnrädern sind 5-Positionsschaltmuffen angeordnet, welche die Verbindung der Zahnräder untereinander und deren Verbindung mit der Welle herstellen. Durch Änderung der Anordnung der Muffen und Kombinieren ihrer Lage kann man eine grössere Gangzahl als in üblichen Konstruktionen mit derselben Zahnradzahl erhalten.

Es ist auch ein Getriebe bekannt, bei welchem die Gangzahl vergrössert und dessen Wirksamkeit durch die Gangschaltung ohne Unterbrechung des Leistungsstromes erhöht ist (SU-A-1131685). Solches Getriebe weist zwei konzentrisch angeordnete Antriebswellen mit Antrieb von zwei Kupplungen, eine Vorgelege- und Abtriebswelle, auf diesen Wellen gelagerte Zahnräder und Muffen zum Verbinden der Wellen mit den Zahnrädern auf. Zur Übertragung des Leistungsstromes von Motor auf die Abtriebswelle können in solcher Konstruktion zwei kinematische Ketten gebildet werden. Um die Gänge ohne Unterbrechung des Leistungsstromes zu schalten, soll bei der Arbeit einer Kette aus einer der Kupplungen und einer der Antriebswellen die zweite Kette aus der anderen Kupplung und anderen Antriebswelle an die Abtriebswelle angeschlossen und dann durch eine rucklose Schaltung unter Kupplungsüberschneidung dar Gangwechsel durchgeführt werden.

Die Vergrösserung der Zahnradzahl und die Einführung von Vielpositionsmuffen, welche den Anschluss dieser Zahnräder zu kombinieren ermöglichen, fördert einigermassen die Vergrösserung der Gangzahl und die Verhinderung der Unterbrechung des Leistungsstromes. Dieser Weg erlaubt Jedoch nicht, ein mechanisches Zahnradgetriebe zu entwickeln, welches auf Veränderungen der Aussenlast durch augenblickliche Auswahl einer optimalen die maximale stabile Belastung des Motors ermöglichenden Übersetzungszahl zu reagieren fähig ist.

Es ist ein Getriebe bekannt (SU-A-444025, 1975), das die Mermale des Oberbegriffes des Anspruches 1 zeigt, und welches eine Antriebswelle, darauf konzentrisch mit ihren Zylinderoberflächen übereinander gelagerte Zahnräder, die durch steuerbare Schaltmuffen miteinander verbunden sind, sowie Innen- und Aussenkränze besitzen, ein Gehäuse und im Gehäuse frei drehbar und axial verschiebbar gelagerte konzentrische Zahnräder, die ebenfalls Innen- und Aussenkränze besitzen und mit Exzentrizität relativ zu den konzentrisch zur Antriebswelle gelagerten Zahnrädern angeordnet sind, aufweist. Damit die Aussen- und Innenkränze der ersten Zahnräder mit den Innen- bzw. Aussenkränzen der zweiten Zahnräder in Eingriff kommen können, ist das Getriebe mit im Gehäuse angeordneten Steuerschiebern versehen, welche jenen Teil der am Gehäuse gelagerten Zahnräder in die Eingriffslage verschieben, der dem gewünschten Gang entspricht. Zwischen den Kränzen der an der Antriebswelle gelagerten Zahnräder, von welchen das Zentralrad mit dieser Welle und das Aussenrad mit der Abtriebswelle verbunden ist, sind Steuerstangen vorgesehen. Unter dem bei der Axialverschiebung der am Gehäuse gelagerten Räder entstehenden Einfluss auf die Steuerstangen werden die Schaltmuffen entsperrt und es erfolgt die Schaltung des gewünschten Ganges.

### Offenbarung der Erfindung

Der vorliegenden Erfindung wurde die Aufgabe der Schaffung eines durch einen hohen Wirkungsgrad charakterisierten Schaltgetriebes mit solcher Gangzahl und Dichte der Übersetzungszahlreihe zugrunde gelegt, welche die maximale Belastung des Motors bei jeder Betriebsart unabhängig von Wegeverhältnissen (vom Fahrwiderstand) und eine Gangschaltung ohne Unterbrechung des Leistungsstromes des Motors mit einer hohen Schnellwirkung gewährleisten.

Die gestellte Aufgabe wird dadurch gelöst, dass die Antriebs- und Abtriebswelle des Schaltgetriebes als parallel gelagerte, mit ihren diametralen Ebenen zueinander gerichtete Scheiben ausgebildet sind, auf welchen mittels auf diesen Ebenen konzentrisch zu den Scheibenachsen angebrachten Stützelemente an Aussen- und Innenzylinderflächen Eingriffselemente tragende zylinderförmige Ringe gelagert sind. Die parallel verlaufenden Scheibendrehachsen, welche gleichzeitig als Achsen der zylinderförmigen Ringe dienen, sind um die einen ständigen Eingriff der Aussen- und Inneneingriffselemente der Ringe einer Scheibe mit den Innen- bzw. Ausseneingriffselementen der Ringe der anderen Scheibe bewirkende Exzentrizität E zueinander versetzt sind. In den Stützelementen sind alle zylinderförmigen Ringe frei drehbar und mit steuerbaren Verriegelung jedes Ringen relativ zu seiner Scheibe gelagert.

Gegebenenfalls sind die Stützelemente als konzentrische Ringnuten ausgebildet. Die Eingriffselemente, z.B. in Form von Zahnkränzen auf dar Innen- und Aussenzylinderfläche jedes Ringes, sind an der Mantellinie des Zylinders mit Versatz zu dessen einer Stirnseite (Scheitel) angeordnet. Mit seiner freien Stirnseite (Grundfläche) ist jeder Ring über einen Schräglager in der dem Durchmesser dieses Ringes entsprechenden Ringnut einer Scheibe gelagert und mit dar anedern Stirnseite. d.h. mit dem Scheitel, über einen Schräglager an der diametralen Ebene der anderen Scheibe abgestützt. Dabei sind die Eingriffselemente aller so gelagerten Ringe im Raum zwischen den diametralen, zueinander gerichteten, parallel verlaufenden Ebenen der Scheiben angeordnet und stehen infolge der Exzentrizität zwischen den Scheibenachsen im ständigen aufeinanderfolgenden Eingriff. Jeder zylinderförmige Ring ist im Stützelement relativ zu der Scheibe frei drehbar gelagert, dabei ist jedoch die Grundfläche des Ringes oder das Stützelement oder die Grundfläche und das Stützelement gemeinsam mit einem Verriegelungsmittel versehen, welches in einem bestimmten Augenblick den Eingriff des Ringes mit der diesen Ring tragenden Scheibe und den Ausgleich ihrer Winkelgeschwindigkeiten bewirkt. Zu diesem Zweck ist das Verriegelungsmittel mit einem Verriegelungssteuersystem verbunden.

Das Verriegelungsmittel kann insbesondere als piezokeramische Ringeinlage ausgebildet sein, welche an der Innenzylinderfläche der Grundfläche des in der Nut der Scheibe gelagerten Ringes befestigt ist. Dabei ist an der einlagenseitigen inneren Ebene der Nut mit einer Isolierung gegen den Scheibenkörper eine an eine Spannungsquelle angeschlossene Ringelektrode angebracht. Der Arbeitsweise der Konstruktion einer solchen Baueinheit wurde die Verwendung des reziproken Piezoeffektes zugrunde gelegt, welcher in der Eigenschaft der Piezokeramik, unter Einwirkung des elektrischen Feldes durch Wendungen der Innendomänen in ihrer Struktur die geometrischen Masse piezokeramischer Erzeugnisse in Abhängigkeit von der Feldstärke und der Geometrie der Aufbringung der Elektroden auf diese Erzeugnisse zu verändern besteht. Notwendige Verriegelungskräfte mit Hilfe der piezokeramischen Ringeinlage sind in der beanspruchten Lösung durch Veränderung der Radialmasse der Einlage bei deren linearen Abhängigkeit von der beim Anlegen der Spannung an die Ringelektrode erhaltenen Feldstärke erreicht (dabei wird eine Potentialdifferenz zwischen der Elektrode und dem Getriebegehäuse erzeugt).

Die gleichzeitige Verriegelung von zwei Ringen, Von welchen der eine auf der Antriebswelle und der andere auf der Abtriebswelle gelagert ist, ist die Einschaltung eines Ganges.

Die Steuerung der Verriegelungsreihenfolge, d.h. die Gangschaltung, erfolgt mittels eines Verriegelungssteuersystems. Im einfachsten Fall schaltet dieses Steuersystem zwei Schiebeschlusskontakte ein, welche die Einschaltung von zwei beliebigen Ringelektroden der Verriegelungemittel in den Spannungsquellenkreis bewirken. Es ist jedoch zweckmässig, in der beanspruchten Lösung ein elektronisches Gangschaltungssteuersystem zu verwenden. Die Verwendung des reziproken Piezoeffektes bei der Realisierung des Verriegelungsmittels öffnet solche Möglichkeiten. Das elektronische Gangschaltungssteuersystem ermöglicht die augenblickliche Zuführung der Steuersignals zu den Stelleinrichtungen und folglich die augenblickliche Gangschaltung, d.h. die Unterbrechung des Leistungsstromes wird verhindert. Dabei öffnen sich Perspektiven der Automatisierung des Lenkprozesses.

Die Verriegelungseinheit und das System der Steuerung der Verriegelung der Ringe relativ zu den Scheiben können in der vorliegenden Konstruktion des Getriebes mittels eines beliebigen den Forderungen an einen sicheren und steuerbaren Eingriff zwischen dem Ring und der Scheibe entsprechenden Verfahrens ausgebildet werden.

Die Ausbildung der Eingriffselemente auf der Innen- und Aussenzylinderfläche der Ringe als Zahnkränze mit dem ständigen aufeinanderfolgenden Eingriff der zylinderförmigen Ringe kann z.B. unter Verwendung von magnetelektrischen Effekten, mittels eines Reibungsverfahrens u.a. verwirklicht werden.

Die Ausbildung der Wellen als parallel und exzentrisch gelagerte Scheiben und die Anbringung der die Eingriffselemente tragenden zylinderförmigen Ringe auf den stirnseiten dieser Wellen, d.h. auf den diametralen Ebenen der Scheiben, ermöglicht es, ein kompaktes mechanisches Getriebe mit einer grösseren Gangzahl zu schaffen, als es in ähnlichen Einrichtungen bei der üblichen Anbringung derselben Zahl der Wellen und Zahnräder erreicht werden kann. Durch Vorhandensein der autonomen Verriegelung jedes zylinderförmigen Ringes relativ zu der ihn tragenden Scheibe ermöglicht die vorliegende Konstruktion die Gangschaltung in jeder Reihenfolge, well die Übertragung des Drehmomentes von jeder Antriebsscheibe auf jeden ihrer Ringe und dann über die Eingriffselemente auf jeden Ring der Abtriebsscheibe und von jedem Ring der Abtriebsscheibe auf diese Scheibe möglich ist. Dabei entsteht der Effect der doppelten Verwendung des Getriebes, d.h. sowohl mit Übersetzung ins Schnelle, als auch ins Langsame. same:

Die vergrösserte Gangzahl und eine minimale Differenz der Übersetzungsverhältnisse zwischen den Gängen gibt mehr Möglichkeiten für die Anpassung der Arbeit des Motors an optimale Bedingungen und erlaubt es, den Belastungskoeffizienten des Motors durch Benutzung im gewünschten Augenblick des Ganges zu erhöhen, welcher die wirtschaftlichste Arbeit des Motors in Abhängigkeit von äusseren Verhältnissen gewährleistet. Bei Verwendung des elektronischen Verriegelungssteuersystems, bei welchem die augenblickliche Gangschaltung erfolgt und auch eine Überlagerung der Arbeit des einen Ganges durch den anderen möglich ist, verhindert die beanspruchte Lösung die Unterbrechung des LeistungsStromes.

Die erhebliche Vergrösserung der Gangzahl bei der gleichzeitigen gegenseitigen Näherung von Übersetzungsverhältnissen zwischen den Gängen wird im beanspruchten Getriebe durch eine abtriebsscheibenseitige Anordnung von ähnlichen parallelen Zusatzabtriebsscheiben erreicht. Dabei'ist die Drehachse jeder nachfolgenden Scheibe in solcher Reine exzentrisch zur Drehachse der vorangegangenen Scheibe und die konzentrischen Stützelemente mit den darin gelagerten zylinderförmigen die Eingriffselemente tragenden Ringen sind auf beiden diametralen Ebenen jeder Abtriebsscheibe mit Ausnahme der letzten angeordnet.

So ist in jedem Raum zwischen den zueinander gerichteten diametralen Ebenen der parallel verfaufenden Scheiben eine kinematische Kette aus im aufeinanderfolgenden Eingriff stehenden zylinderförmigen Ringen gebildet, von denen jeder relativ zu der ihn tragenden Scheibe frei drehbar ausgebildet ist und relativ zu dieser Scheibe verriegelt werden kann. Die Erhöhung des Belastungskoeffizienten des Motors bei der Einführung zusätzlicher Abtriebsscheiben ins Getriebe erfolgt durch die Vergrösserung der Gangzahl, welche auch dem Produkt der grössten Gangzahl einer kinematischen Kette mit den grössten Gangzahlen von nachfolgenden zwischen den parallelen Scheiben gebildeten kinematischen Ketten gleich ist. In solchem Fall dient die erste (oder mehrere ersten) kinemstische Kette im Getriebe als komplizierter Mehrstufenteiler, von dessen jeder Stufe man ihre eigene Gangreine für nachfolgende kinematische Ketten erhalten kann. Da sich die gesamte Gangzahl erheblich schneller vergrössert als die Vergrösserung des maximalen Übersetzungsbereiches des Getriebes bei der Einführung in dessen Konstruktion von zusätzlichen Scheiben und kinematischen Ketten zwischen ihnen, erfolgt eine noch grössere gegenseitige Annäherung des minimalen Intervalls im Übersetzungsverhältnis zwischen den Nachbargängen, d.h. es erfolgt eine Verdichtung des Übersetzungsbereiches des Getriebes durch eine erhebliche Vergrösserung der Gangzahl in diesem Bereich.

In der Tat ist beim Schaltgetriebe die maximale Leistungsbenutzung nur in einigen diskreten Punkten möglich, wenn die Drehzahl der Kurbelwelle des Motors maximal ist und in den übrigen Fällen nicht völlig benutz wird (W.I. Platonov "Allradtriebfahrzeuge", 1989, Verlag "Maschinostrojenije", Moskau, S. 162). Die vorliegende Konstruktion des Getriebes ermöglicht es, die Zahl von solchen diskreten Punkten so erheblich zu vergrössern, dass sie sich zu einer fast durchgehenden Linie vereinigen, d.h. die beanspruchte Konstruktion erhöht erheblich den Belastungskoeffizienten des Motors und ermöglicht es, seine Leistung rationeller auszunutzen, was seinerseits zur Verbesserung der Betriebskennlinien eines Fahrzeuges führt.

### Kurze Beschreibung der Zeichnung

Im folgenden wird die Erfindung anhand der Beschreibung deren konkreter Ausführungsbeispiele und der beiliegenden Zeichnung erläutert. Es zeigen:

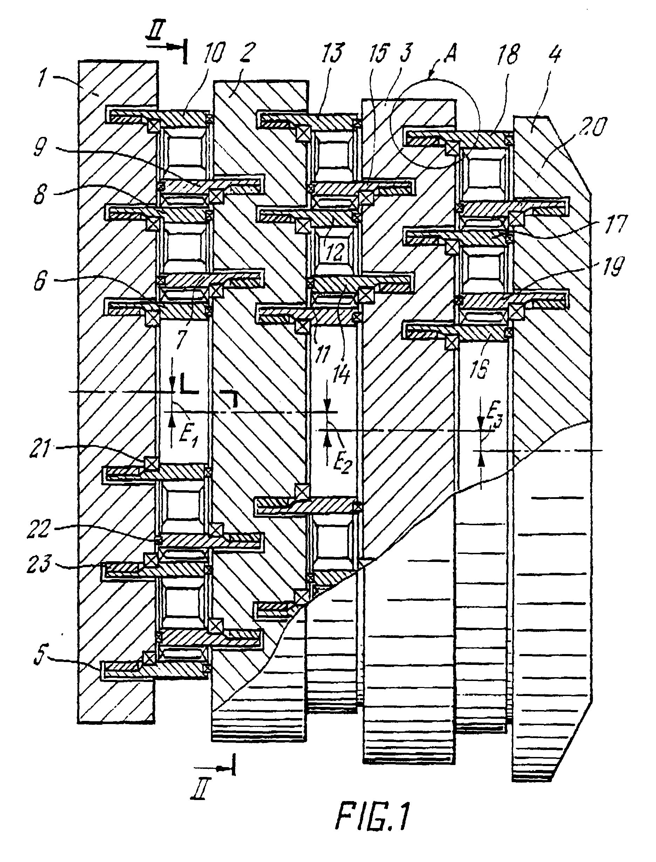

Fig. 1 eine Gesamtansicht des Getriebes aus vier Scheiben (im Schnitt);

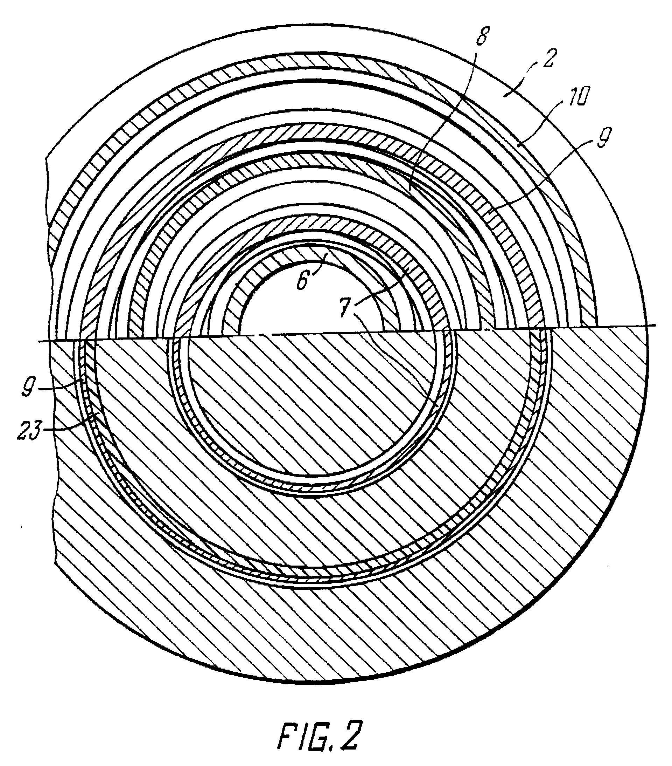

Fig. 2 einen Stufenschnitt A-A in Fig. 1;
Fig. 3 eine Baueinheit "I" in Fig. 1 in vergrösserter Darstellung.

### Ausführungsbeispiel

Das Getriebe, welches in der die beanspruchte Erfindung illustrierenden Zeichnung dargestellt ist, weist mit ihren diametralen Ebenen parallel zueinander in einem Gehäuse (nicht gezeigt) gelagerte Scheiben 1, 2, 3, 4 auf. Die Scheibe 1 ist als Antriebsscheibe ausgebildet und mit dem Motor eines Fahrzeuges gekoppelt (die Kopplung ist nicht gezeigt). Die Scheibe 2 ist in Bezug auf die Scheibe als Abtriebsscheibe und in Bezug auf die nachfolgende Scheibe als Antriebsscheibe ausgebildet. Auf ähnliche Weise ist die Scheibe 3 in Bezug auf die Scheibe 2 als Abtriebsscheibe, in Bezug auf die letzte in dieser Reihe Scheibe 4 jedoch als Antriebsscheibe ausgebildet. Die Drehachse der Scheibe 2 ist relativ zu der zu ihr parallelen Drehachse der Scheibe 1 um die Grösse der Exzentrizität E₁ versetzt. Den gleichen Versatz E₂ relativ zur Drehachse der Scheibe 2 besitzt die zu dieser Drehachse parallele Drehachse der Scheibe 3 und relativ zur Drehachse der Scheibe 3 die zu dieser Drehachse parallele Drehachse der Scheibe 4. Auf den zueinander gerichteten diametralen Ebenen aller Scheiben sind konzentrisch zu ihren Drehachsen die Ringnuten ausgebildet, welche als Aufnahmeelemente für zylinderförmige Ringe dienen. An den Innen- und Aussenzylinderflächen sind die Ringe mit Zahnkränzen versehen, welche über die Mantellinie des Zylinders zu seiner Stirnseite (Scheitel) hin versetzt sind. Mit seiner freien Stirnseite (Grundfläche) ist jeder Ring in der seinem Durchmesser angepassten Ringnut 5 so gelagert, dass die Zahnkränze der auf den zueinander gerichteten diametralen Ebenen der Scheiben gelagerten Ringe im Raum zwischen diesen Ebenen angeordnet sind. Durch Anordnung der nebeneinander liegenden Scheiben mit Exzentrizität E₁, E₂, E₃ zwischen ihren Drehachsen stehen diese Zahnkränze im ständigen Eingriff und bilden eine Kette, in welcher der Aussenzahnkranz eines Ringes mit dem Innenzahnkranz des auf der anderen Scheibe, d.h. mit Exzentrizität, gelagerten Ringes im Eingriff steht. Der Aussenzahnkranz dieses Ringes kommt seinerseits in dem dem vorangegangenen Eingriffssektor diametral gegenüberliegenden Sektor mit dem Innenzahnkranz des an der primär genannten Scheibe gelagerten Ringes nächsten Durchmessers in Eingriff, und zwar: der Aussenzahnkranz des auf der der Scheibe 2 zugewandten Ebene der Scheibe 1 gelagerten Ringes 6 kommt mit dem Innenzahnkranz des auf der der Scheibe 1 zugewandten Ebene der Scheibe 2 gelagerten Ringes 7 in Eingriff. Der Aussenzahnkranz des Ringes 7 kommt in dem diametral gegenüberliegenden Sektor mit dem Innenzahnkranz des Ringes 8 der Scheibe 1 in Eingriff. Der Aussenzahnkranz des Ringes 8 wirkt auf ähnliche Weise mit dem Innenzahnkranz des Ringes 9 dar Scheibe 2 zusammen, dessen Aussenzahnkranz seinerseits mit dem Innenzahnkranz des auf der Ebene der Scheibe 1 gelagerten Ringes 1 in Eingriff kommt.

Auf selbe Weise wirken die in den Stützelementen auf der der Scheibe 3 zugewandten Ebene der Scheibe 2 gelagerten Ringe 11, 12, 13 im Raum zwischen den diametralen Ebenen der Scheiben 2 und 3 mit den auf der der Scheibe 2 zugewandten Ebene gelagerten Ringen 14, 15 und im Raum zwischen den Ringen der Scheiben 3 und 4 die auf ähnliche Weise gelagerten Ringe 16, 17, 18 der Scheibe 3 mit den Ringen 19, 20 der Scheibe 4 zusammen. Also stehen alle Ringe im Raum zwischen den Scheiben im ständigen aufeinanderfolgenden inneren Eingriff und bilden in jedem Raum eine kinematische Kette mit verschiedenen Winkelgeschwindigkeiten der zylinderförmigen Ringe.

In jedem Raum zwischen den Scheiben sind die Ringe dadurch gespreizt angeordnet, dass jeder Ring mit seiner Grundfläche in der entsprechenden Ringnut 5 der ihn tragenden Scheibe über einen Schräglager 21 gelagert und mit seinem Scheitel über einen Axiallager 22 an der diametralen Ebene der daneben liegenden Scheibe abgestützt ist.

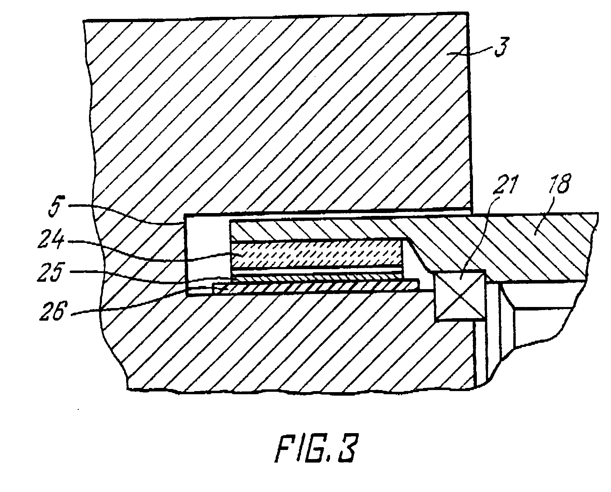

Die Grundfläche jedes Ringes ist in der entsprechenden Ringnut der Scheibe mit einem spiel gelagert und mit einem Mittel 23 zur Verriegelung dieses Ringes relativ zu der ihn tragenden Scheibe versehen. Das Verriegelungsmittel (Fig. 3) umfasst eine am Innendurchmesser der Grundfläche des Ringes befestigte Ringeinlage 24 aus Piezokeramik (z.B, der Marke UTEC-3 ; "Nachschlagebuch für elektrotechnische Stoffe", Gesamtredaktion: Korizkij, Verlag "Energoatomisdat", 1988, Leningrad, B. 3. S. 580 bis 590) und eine auf dar Innenfläche der Nut 5 einlagaseitig angeordnete Elektrode 25, welche gegen die Scheibe durch eine Zwischenlage 26 isoliert und über ein Steuersystem mit einer Spannungsquelle elektrisch verbunden ist (die Verbindung und das Steuersystem sind in der Zeichnung nicht gezeigt).

Das Getriebe arbeitet folgenderweise.

Das Drehmoment wird vom Motor auf die Antriebescheibe 1 übertragen und versetzt sie in Drehung. Dabei drehen sich alle Ringe in den Stützelementen frei relativ zu den sie tragenden Scheiben (Neutralgang) und das Drehmoment wird auf die Scheiben 2, 3, 4 nicht übertragen. Mit Hilfe des Steuersystems und elektrischer Verbindungen wird gleichzeitig die Spannung zu den Elektroden 25 der Verriegelungsmittel jedes der zwischen den Ebenen der Scheiben 1 und 2 angeordneten Ringpaare 6, 7; 6, 9; 8, 7; 8, 9; 10, 7; 10, 9, jedes der zwischen den Ebenen dar Scheiben 2 und 3 angeordneten Ringpaare 11, 14; 11, 15; 12, 14; 12, 15; 13,14; 13, 15 und Jedes der zwischen den Ebenen der Scheiben 3 und 4 angeordneten Ringpaare 16, 19; 16, 20; 17, 19; 17, 20; 18, 19; 18, 20 zugeführt. Zwischen der Grundfläche des Ringes und der Elektrode, an welche die Spannung angelegt wird, entsteht ein starkes die Verformung dar piezokeramischen Einlage 24 in radialer Richtung, d.h. die Vergrösserung ihres Durchmessers, durch Entstehung des reziprokan Piezoeffektes und durch eine richtige Polarisation der Piezokeramik bewirkendes elektrisches Feld. Infolge der bei der Vergrösserung der radialen Abmessungen entstehenden Kräfte ergibt sich ein padialer Druck auf die Innenzylinderfläche der dünnwandigen Grundfläche des Ringes (diese Drücke können 200 kg/cm² erreichen). Die Grundfläche des Ringes verformt sich in radialer Richtung, wobei ein Spalt ausgewählt wird, welcher geringer als die durch die elastische Vorformung des Materials der Grundfläche bestimmte Grösse ist, und die reibschlüssige Verriegelung des Ringes und der Scheibe erfolgt. Durch die Verriegelung wird das Drehmoment von der Antriebsscheibe 1 auf den verriegelten Ring dieser Scheibe übertragen. Da alle im Raum zwischen den Scheiben angeordneten Zahnkränze dar Ringe im ständigen aufeinanderfolgenden Eingriff stehen, wird das Drehmoment auf alle Ringe der kinematischen Kette zwischen den Scheiben 1 und 2 übertragen. Die Verriegelung des Ringes 7 oder 9 relativ zur Scheibe 2 bewirkt die Übertragung des Drehmomentes auf die Scheibe 2, die Verriegelung von zwei beliebigen Ringpaaren relativ zu ihren Scheiben in der Kette zwischen den Scheiben 2 und 3 auf die Scheibe 3 und in dar Kette zwischen den Scheiben 3 und 4 auf die Scheibe 4. Der Gang ist eingeschaltet. Um. den Gang umzuschalten, müssen mit Hilfe des Steuersystems die Elektroden der Verriegelungsmittel der verriegelten Ringpaare spannungslos gemacht und die Spannung an die anderen Elektroden angelegt werden. Die Auswahl der Ringpaare, welche für die Einschaltung des Ganges verriegelt Werden müssen, wird durch die Auswahl der im gegebenen Zeitpunkt notwendigen die maximale Belastung des Motors bewirkenden Übersetzungszahl des Getriebes in Abhängigkeit von den äusseren Bedingungen bestimmt.

### Industrielle Verwendbarkeit

Die beanspruchte Erfindung kann in Transmissionen von Fahrzeugen, insbesondere Kraftfahrzeugen, verwendet werden.

## Patentansprüche

1. Getriebe, umfassend eine in einem Gehäuse angeordnete Antriebswelle mit darauf konzentrisch zu ihrer Achse gelagerten zylinderförmigen Ringen (6, 8, 10), welche an Aussen- und Innenzylinderflächen mit Innen- bzw. Ausseneingriffselementen von ähnlichen konzentrischen Ringen (7, 9), deren gemeinsame Achse eine Exzentrizität (E₁) relativ zur Achse der Antriebswelle besitzt, zusammenwirkende Eingriffselemente tragen, sowie eine Abtriebswelle, **dadurch gekennzeichnet,** dass die Antriebs- und Abtriebswelle als parallel gelagerte mit ihren diametralen Ebenen zueinander gerichtete Scheiben (1, 2) mit den relativ zueinander um die Grösse der Exzentrizität (E₁) versetzten Drehachsen und mit auf den diametralen Ebenen konzentrisch angebrachten Stützelementen (21) für die zylinderförmigen Ringe (6,8,10) ausgebildet ist, wobei die Ringe (6, 8, 10) mit ihren Grundflächen in den genannten Stützelementen (21) relativ zu ihrer Scheibe (1) jeweils frei drehbar gelagert und mit ihren die kontinuierlich zusammenwirkenden Eingriffselemente tragenden Scheiteln im Raum zwischen den Scheiben (1, 2) angeordnet sind, wobei entweder die Grundflächen der Ringe (6-10), oder die Stützelemente, oder beides mit einem Verriegelungssteuersystem verbundenen Mitteln (23) zum Verriegeln der Ringe (6-10) relativ zu ihren Scheiben (1, 2) versehen sind.

2. Getriebe nach Anspruch 1, **dadurch gekennzeichnet,** dass es abtriebsscheibenseitig mit mindestens einer weiteren ähnlichen Abtriebsscheibe (3) versehen ist, deren Achse exzentrisch (E₂) zur Achse der Nachbarscheibe (2) ist, wobei die konzentrischen Stützelemente (21) mit den darin gelagerten die Eingriffselemente tragenden zylinderförmigen Ringen (11-15) auf beiden diametralen Ebenen jeder Scheibe (2, 3) mit Ausnahme der äusseren Scheibe angeordnet sind.

3. Getriebe nach Anspruch 1 und 2, **dadurch gekennzeichnet,** dass die Stützelemente (21) als im Scheibenkörper ausgenommene Ringnuten ausgebildet sind, jeder zylinderförmige Ring (6-20) als Zahnrad mit Innen- und Aussenkränzen und einer in dar Ringnut entsprechenden Durchmessers frei gelagerten hülsenförmigen Nabe und das Verriegelungsmittel (23) als an der Zylinderfläche der Nabe befestigte an der Nutinnenfläche gelagerte piezokeramische Ringeinlage (24) ausgebildet ist, wobei einlageseitig mit Isolierung (26) gegen den Scheibenkörper eine an eine Spannungsquelle periodisch anschliessbare Ringelektrode (25) angeordnet ist.

## Claims

1. A gear mechanism, comprising a drive shaft which is arranged in a housing and has cylindrical rings (6, 8, 10) mounted thereon concentrically in relation to its axis, these rings carrying at outer and inner cylindrical faces engagement elements which cooperate with inner and outer engagement elements respectively of similar concentric rings (7, 9) whereof the common axis has an eccentricity (E₁) relative to the axis of the drive shaft, the gear mechanism further comprising an output shaft, characterized in that the drive shaft and output shaft are constructed as discs (1, 2) mounted parallel with their opposing planes directed towards one another, having their axes of rotation offset relative to one another by the amount of the eccentricity (E₁) and having supporting elements (21) fixed concentrically on the opposing planes, for the cylindrical rings (6, 8, 10), the rings (6, 8, 10) each being mounted freely rotatably relative to their disc (1), with their base faces in the said supporting elements (21), and being arranged such that their opposite end faces carrying the continuously cooperating engagement elements are in the space between the discs (1, 2), either the base faces of the rings (6 - 10) or the supporting elements, or both, being provided with means (23) connected to a locking control system for locking the rings (6 - 10) relative to their discs (1, 2).

2. A gear mechanism according to Claim 1, characterized in that on the output disc side at least one further, similar output disc (3) is provided whereof the axis is eccentric (E₂) in relation to the axis of the neighbouring disc (2), the concentric supporting elements (21) being arranged with the cylindrical rings (11 - 15) mounted therein and carrying the engagement elements on both opposing planes of each disc (2, 3), with the exception of the outer disc.

3. A gear mechanism according to Claims 1 and 2, characterized in that the supporting elements (21) are constructed as annular grooves made in the disc body, each cylindrical ring (6 - 20) is constructed as a toothed wheel having inner and outer wheel rims and a sleeve-shaped hub, mounted freely in the annular groove of corresponding diameter, and the locking means (23) is constructed as a piezoceramic annular insert (24) secured to the cylinder face of the hub and mounted on the groove inner face, an annular electrode (25) which can be connected periodically to a voltage source being arranged on the insert side with insulation (26) from the disc body.

## Revendications

1. Transmission à engrenages, comprenant un arbre de transmission disposé dans un carter avec des bagues cylindriques (6, 8, 10) qui y sont montées à rotation concentriquement à l'axe de l'arbre et qui portent des éléments d'engrènement coopérants sur des surfaces cylindriques extérieures et intérieures avec des éléments d'engrènement intérieurs ou extérieurs appartenant à des bagues concentriques similaires (7, 9), dont l'axe commun présente une excentricité (E₁) par rapport à l'axe de l'arbre d'entrée, ainsi qu'un arbre de sortie, caractérisée en ce que l'arbre d'entrée et de sortie est réalisé à l'aide de disques (1, 2) qui sont montés à rotation parallèlement avec leurs plans diamétraux tournés l'un vers l'autre et leurs axes de rotation décalés l'un par rapport à l'autre de la valeur de l'excentricité (E₁), et avec des éléments de support (21) pour les bagues cylindriques (6, 8, 10) disposés concentriquement sur les plans diamétraux, en ce que les bagues (6, 8, 10) sont montées chacune tournant librement, par ses surfaces de base dans lesdits éléments de support (21) par rapport à son disque (1) et sont disposées par leurs crêtes portant les éléments d'engrènement coopérants en continu, dans l'espace entre les disques (1, 2), et en ce que soit les surfaces de base des bagues (6 à 10), soit les éléments de support, soit les deux, sont munis de moyens (23) reliés à un système de commande de blocage pour assurer le blocage des bagues (6 à 10) par rapport à leurs disques (1, 2).

2. Transmission à engrenages selon la revendication 1, caractérisée en ce que, du côté du disque de sortie de puissance, elle est munie d'au moins un autre disque similaire (3) de sortie de puissance, dont l'axe est excentrique (E₂) par rapport à l'axe du disque voisin (2), et en ce que les éléments de support concentriques (21), avec les bagues cylindriques (11 à 15) portant les éléments d'engrènement montés à rotation au-dessus, sont disposés dans deux plans diamétraux de chaque disque (2, 3), à l'exclusion du disque le plus extérieur.

3. Transmission à engrenages selon la revendication 1 et 2, caractérisée en ce que les éléments de support (21) sont réalisés sous la forme de rainures annulaire ménagées dans le corps de disque, en ce que chaque bague cylindrique (6 à 20) est réalisée sous la forme d'une roue dentée à couronnes intérieure et extérieure et d'un moyeu en forme de manchon monté à rotation libre dans la rainure annulaire de diamètre correspondant et les moyens de blocage (23) sont réalisés sous la forme d'un insert annulaire piézocéramique monté sur la surface intérieure de la rainure et fixé à la surface cylindrique du moyeu, et en ce qu'il est prévu du côté de l'insert, avec une isolation (26) contre le corps du disque, une électrode annulaire (25) susceptible d'être reliée périodiquement à une source de tension.
